# EUROPÄISCHE PATENTSCHRIFT

(11) **EP 1 617 964 B1**
(45) Veröffentlichungstag und Bekanntmachung des Hinweises auf die Patenterteilung: **28.11.2007**
(21) Anmeldenummer: 04729851.8
(22) Anmeldetag: 28.04.2004
(51) Int. Cl.: B23K 9/32

(54) **VORRICHTUNG ZUM REINIGEN EINER GASDÜSE EINES SCHWEISSBRENNERS**
DEVICE FOR CLEANING THE GAS NOZZLE OF A WELDING TORCH
DISPOSITIF SERVANT A NETTOYER UNE TUYERE A GAZ D'UN CHALUMEAU DE SOUDAGE

(30) Priorität: 28.04.2003 DE 10319261
(43) Veröffentlichungstag der Anmeldung: 25.01.2006
(73) Patentinhaber: Alexander Binzel Schweisstechnik GmbH & Co. KG, 35418 Buseck (DE)
(72) Erfinder: SCHÄFER, Ralf, 35435 Wettenberg (DE)
(74) Vertreter: Müller, Eckhard
(86) Internationale Anmeldenummer: PCT/EP2004/004472
(87) Internationale Veröffentlichungsnummer: WO 2004/096477

(56) Entgegenhaltungen:
- DE-U- 8 707 787
- DE-U- 9 016 112
- US-A- 4 733 050
- PATENT ABSTRACTS OF JAPAN Bd. 0154, Nr. 52 (M-1180), 18. November 1991 (1991-11-18) & JP 3 193272 A (KOBE STEEL LTD), 23. August 1991 (1991-08-23)

## Beschreibung

Die Erfindung betrifft eine Vorrichtung zum Reinigen einer Gasdüse eines Schweißbrenners und zum Einsprühen der Gasdüse beziehungsweise eines in der Gasdüse befindlichen Schweißdrahtes, mit einer Spann-/Haltevorrichtung für die Gasdüse mit einer Reinigungsvorrichtung zum mechanischen Entfernen von Schweißrückständen aus der Gasdüse, wobei die Reinigungsvorrichtung in Richtung einer ersten Achse zur Spann-/Haltevorrichtung hin beziehungsweise von dieser weg verfahrbar ist, und mit einer Sprühvorrichtung zum Austragen eines Antihaftmittels oder eines sonstigen fluiden Mediums.

Beim Schweißen wird der Schweißdraht durch die der Gaszufuhr dienenden Gasdüse geführt und üblicherweise mit Hilfe eines sogenannten Handlinggerätes oder eines Roboters der Schweißstelle genähert. Beim Schweißvorgang selbst verspritzt das Schweißmaterial, wobei sich in der Gasdüse Verunreinigungen absetzen, welche die Gasdüse nach und nach verschließen und die Gaszufuhr stören. Deshalb ist es erforderlich, die Gasdüse des öfteren zu reinigen.

Aus der DE 87 07 787 U1 ist bereits eine Reinigungsvorrichtung mit den eingangs genannten Merkmalen bekannt. Das dort beschriebene Gerät zum Reinigen der Gasdüse eines Schweißbrenners weist in die Düse zentriert eingeführte rotierende Messer auf. Die Gasdüse wird in das Reinigungsgerät eingefahren, zentriert und verriegelt sowie durch die rotierenden Messer gereinigt. Nach dem Reinigen der Gasdüse wird diese mittels einer Sprühvorrichtung mit einem Antihaftmittel oder dergleichen besprüht. Anschließend wird die Verriegelungseinrichtung beziehungsweise Spann-/Haltevorrichtung gelöst und die Düse zur weiteren Verwendung aus der Reinigungsvorrichtung entnommen. Die Sprühvorrichtung ist in Form von zwei seitlich der Gasdüse stationär angeordneten Sprühdüsen ausgebildet, die nach Beendigung des Reinigungsvorganges durch die Reinigungsvorrichtung und Absenken der Reinigungsvorrichtung betätigt werden und ein Antihaftmittel in die Gasdüse spritzen oder fördern.

Nachteilig an dieser bekannten Reinigungsvorrichtung erweist sich, dass ein Großteil des Antihaftmittels nicht in die Gasdüse gelangt und auch für eine gleichmäßige Benetzung des Innenraums der Gasdüse beziehungsweise des dort befindlichen Schweißdrahtes nicht Sorge getragen ist. Diese ungünstige Anordnung beziehungsweise stationäre Positionierung der Sprühdüsen bei der bekannten Reinigungsvorrichtung mag auch darauf zurückzuführen sein, dass die Reinigungsvorrichtung zusätzlich eine Schneidvorrichtung aufweist, welche den in der Gasdüse beziehungsweise aus der Spitze der Gasdüse herausragenden Schweißdraht abschneidet. Die Schneidvorrichtung besitzt ein feststehendes Messer, welches unmittelbar unterhalb der Öffnung der Gasdüse angeordnet ist. Diesem feststehenden Obermesser ist ein verschwenkbares Untermesser zugeordnet, mit dem der Schweißdraht abgeschnitten werden kann.

Ein weiteres Gerät zum Reinigen einer Gasdüse eines Schweißbrenners ist aus der DE 84 17 838 U1 bekannt. Dieses Gerät weist ebenfalls umlaufende Messer auf, welche Verunreinigungen, die sich in der Gasdüse abgesetzt haben, abkratzt. Anschließend wird die Gasdüse mit einem Antihaftmittel besprüht. Das Reinigungsgerät weist hierzu eine Düsenaufnahme, bestehend aus zwei Anschlägen und einem Kolben auf, der die Gasdüse gegen die Anschläge drückt. Unterhalb der Aufnahme für die Gasdüse sind axial feststellbare Messer sowie schräg angestellte stationäre Sprühdüsen für ein Antihaftmittel vorgesehen.

Dieser Reinigungsvorrichtung haften die vorerwähnten Nachteile ebenfalls an.

Eine weitere Reinigungsvorrichtung für die Gasdüse eines Schweißbrenners ist aus der DE 90 16 112 U1 bekannt. Dieses Reinigungsgerät weist ein motorisch angetriebenes, umlaufendes Messer auf, welches in die Gasdüse eingeführt und nach dem Freikratzen der Gasdüse aus dieser herausbewegt wird. Zum Einsprühen der Gasdüse mit einem Antihaftmittel oder einem sonstigen Fluid ist es vorgesehen, dass der Messerstiel beziehungsweise die Messeraufnahme Kanäle für die Zuführung des Antihaftmittels aufweisen. Diese Maßnahmen erweisen sich als technisch äußerst kompliziert und aufwendig, da das Antihaftmittel durch eine schnell rotierende Welle, nämlich die Antriebswelle der Messer, gefördert werden muss. Somit sind aufwendige Dichtungen und dergleichen vorzusehen. Im übrigen schirmen die Messer wenigstens einen Teil des aus der Düse austretenden Antihaftmittelstrahls ab, so dass auch bei dieser komplexen Anordnung eine gleichmäßige Beaufschlagung der Gasdüse mit Antihaftmittel nicht gewährleistet ist.

Schließlich offenbart die US 4,778,976 eine Reinigungsvorrichtung, bei der das Antihaftmittel durch eine unmittelbar unterhalb der Gasdüse angeordnete Sprühdüse in diese hineingesprüht wird. Allerdings wird diese Gasdüse nicht mittels eines rotierenden Messers oder Fräsers von Schweißrückständen befreit, sondern von außen mit mechanischen Stößen beaufschlagt, die dafür sorgen sollen, dass sich die Schweißrückstände von der Gasdüse lösen. In der Praxis hat sich jedoch gezeigt, dass mit diesen Maßnahmen eine ausreichende und rasche Reinigung der Gasdüse eines Schweißbrenners nicht möglich ist.

Dem gegenüber liegt der vorliegenden Erfindung die Aufgabe zugrunde, eine Vorrichtung mit den eingangs genannten Merkmalen dahingehend weiterzubilden, dass eine vollständige Benetzung der Gasdüse mit Antihaftmittel oder dergleichen Fluid ermöglicht und eine genaue Dosierung sowie ein geringer Verbrauch von Antihaftmittel oder dergleichen Fluid gewährleistet ist. Weiterhin soll die Vorrichtung einfach aufgebaut und gemäß einem weiteren Nebenaspekt der Erfindung auch dazu geeignet sein, den in der zu reinigenden Gasdüse befindlichen Schweißdraht abzulängen, so dass die in der Regel am Ende des Schweißdrahtes vorhandenen kugelförmigen oder balligen Verdickungen entfernt sind.

Die Hauptaufgabe der vorliegenden Erfindung wird mit einer Vorrichtung der eingangs genannten Art im wesentlichen dadurch gelöst, dass die Sprühvorrichtung in Richtung einer zur ersten Achse unterschiedlich angeordneten zweiten Achse bezüglich der Spann-/Haltevorrichtung verfahrbar ist. Aufgrund dieser Maßnahmen ist erreicht, dass nach Beendigung der Tätigkeit der Reinigungsvorrichtung zum mechanischen Entfernern von Schweißrückständen aus der Gasdüse und Herausfahren der Reinigungsvorrichtung aus der Gasdüse die Sprühvorrichtung in einer zur Verfahrrichtung der Reinigungsvorrichtung unterschiedlichen Richtung, bevorzugt im wesentlichen quer zu einer Längsachse der Gasdüse beziehungsweise der Spann-/Haltevorrichtung verfahren wird, wobei dann der aus der Sprühvorrichtung austretende Fluidstrahl während des Verfahrens der Sprühvorrichtung die Gasdüse, insbesondere deren Innenflächen sowie den dort befindlichen Schweißdraht vollständig benetzt. Durch eine entsprechende zeitliche Steuerung des aus der Sprühvorrichtung austretenden Fluidstrahls beziehungsweise Fluidnebels kann dafür Sorge getragen werden, dass praktisch sämtliches aus der Sprühvorrichtung austretendes Fluid auch zur Gasdüse beziehungsweise in deren Innenraum gelangt, so dass ein geringer Verbrauch von Antihaftmittel gewährleistet ist.

Nach einer ersten vorteilhaften Ausgestaltung der Erfindung ist es vorgesehen, dass die Spann-/Haltevorrichtung ein oder mehrere Spann-/Haltebacken zum Umgreifen beziehungsweise Halten der Gasdüse aufweist, wobei die Gasdüse bezüglich der ersten Achse zentriert ist. Bevorzugt wird der Schweißbrenner beziehungsweise die Gasdüse in vertikaler Richtung in der erfindungsgemäßen Vorrichtung gespannt beziehungsweise gehalten, wobei die Gasdüse in Richtung der darunter angeordneten Reinigungsvorrichtung weist, so dass die Reinigungsvorrichtung einfach und zentriert in die Gasdüse hinein beziehungsweise aus dieser heraus verfahren werden kann.

Dabei weist die Reinigungsvorrichtung ein rotierendes Messer oder einen rotierenden Fräser auf, dessen Rotationsachse mit der ersten Achse im wesentlichen fluchtet. Aufgrund dieser Maßnahme ist dafür Sorge getragen, dass die Schweißrückstände aus der Gasdüse vollständig entfernt und Beschädigungen des Messers oder Fräsers beziehungsweise der Gasdüse vermieden sind. Es versteht sich, dass die Dimensionen des Messers oder Fräsers an die jeweils zu reinigende Gasdüse angepasst sind.

Bevorzugt ist das Messer oder der Fräser durch einen Antrieb, beispielsweise einen elektromotorischen, insbesondere jedoch einen luftmotorischen Antrieb, angetrieben.

Weiterhin erweist es sich als vorteilhaft, dass die Drehzahl des Fräsers oder des Messers von einer Drehzahlüberwachung erfasst und gesteuert/geregelt wird.

Von besonderem Vorteil sind die erste Achse und zweite Achse im wesentlichen quer zueinander angeordnet und schließen bevorzugt einen Winkel zwischen 60° und ca. 150°, vorzugsweise von ca. 90°, ein. Während die Reinigungsvorrichtung in Richtung der ersten Achse, welche auch der Gasdüsenachse im wesentlichen entspricht, verfahren wird, wird die Sprühvorrichtung quer zu dieser Achse, bevorzugt rechtwinklig zu dieser Achse, verfahren, so dass eine vollständige Benetzung der Gasdüse mit Fluid, beispielsweise Antihaftmittel, bei dosiertem geringem Verbrauch des Fluids gewährleistet ist.

Bevorzugt weist die Sprühvorrichtung eine Sprühdüse auf, die in Richtung dieser zweiten Achse verfahrbar ist. Diese Maßnahme hat den Vorteil, dass die Sprühvorrichtung an sich mit Ausnahme der Sprühdüse beispielsweise stationär in der Reinigungsvorrichtung angeordnet sein kann, während die verfahrbare Sprühdüse mit der stationär angeordneten Sprühvorrichtung beispielsweise über einen flexiblen-Schlauch oder dergleichen verbunden ist.

Von Vorteil ist es nach einer anderen Ausgestaltung der Erfindung vorgesehen, dass die verfahrbare Sprühdüse eine Düsenachse aufweist, die mit der ersten Achse einen Winkel von < 60°, bevorzugt 45° bis 25° oder weniger, einschließt. Die Sprühdüse muss daher nicht unmittelbar unterhalb der Gasdüse, sondern ein wenig seitlich versetzt angeordnet werden, wobei dennoch dafür Sorge getragen ist, dass das gesamte aus der Sprühdüse austretende Fluid auch in die Gasdüse gelangt.

Nach einer vorteilhaften Weiterbildung der Erfindung ist es vorgesehen, dass die Reinigungsvorrichtung eine verfahrbare Schneidvorrichtung zum Ablängen des Schweißdrahtes der Gasdüse besitzt. Somit kann während des Reinigungsvorganges der Gasdüse auch die Spitze des in der Gasdüse befindlichen, in der Regel balligen oder verdickten Schweißdrahtes entfernt werden.

Bevorzugt weist die Schneidvorrichtung ein sogenanntes Untermesser und ein sogenanntes Obermesser auf, wobei wenigstens eines der Messer, bevorzugt beide Messer, relativ zueinander verfahrbar sind. Bevorzugt sind die Messer in der Ruhestellung seitlich der ersten Achse angeordnet und werden bei Aktivierung dann hin zur ersten Achse verfahren, um den Schweißdraht abzulängen.

Weiterhin ist es nach einer anderen vorteilhaften Ausgestaltung der Erfindung vorgesehen, dass die Schneidvorrichtung Messerhalter zum Halten der auswechselbaren Messer aufweist.

Auch bietet es sich von Vorteil an, dass die Schneidvorrichtung beziehungsweise die Messer beziehungsweise Messerhalter in Richtung der zweiten Achse verfahrbar sind.

Bevorzugt befindet sich die Schneidvorrichtung zwischen Spann- und Haltevorrichtung und Reinigungsvorrichtung. Im Gegensatz zum Stand der Technik bedarf es damit keines Einschwenkens der Schneidvorrichtung, bspw. von der Seite her oder einer zusätzlichen Relativbewegung des Roboterarms mit Brenner, um die Drahtelektrode auf die Schneidvorrichtung auszurichten. Die Schneidvorrichtung befindet sich vorzugsweise in einem solchen Abstand von der Spann-/Haltevorrichtung, wie die Drahtelektrode nach dem Schneidvorgang gegenüber der Spitze der Stromdüse vorstehen soll.

Nach einer besonders vorteilhaften eigenständigen Ausgestaltung der Erfindung, auch unabhängig von den restlichen beschriebenen Merkmalen der erfindungsgemäßen Vorrichtung ist es vorgesehen, dass die Sprühvorrichtung mechanisch mit der Schneidvorrichtung gekoppelt ist. Aufgrund dieser Maßnahme ist es möglich, dass während der Betätigung der Schneidvorrichtung und des Verfahrens wenigstens eines der Messer der Schneidvorrichtung in Richtung der zweiten Achse gleichzeitig auch die Sprühvorrichtung beziehungsweise die Sprühdüse der Sprühvorrichtung in Richtung dieser zweiten Achse verfahren und während des Ablängens des Schweißdrahtes: gleichzeitig durch Einschalten der Sprühvorrichtung die Gasdüse mit Antihaftmittel oder sonstigem Fluid benetzt werden kann. Durch diese gekoppelte Bewegung der Sprühvorrichtung beziehungsweise Sprühdüse ist eine zentrale Positionierung der Sprühdüse unterhalb der Gasdüse des Schweißbrenners erreicht, so dass eine bessere Benetzung der Gasdüse mit Antihaftmittel und eine genauere Dosierung sowie ein geringerer Verbrauch von Antihaftmittel gewährleist ist. Auch kann aufgrund dieser Maßnahmen die Schneidvorrichtung nach Herausfahren der Reinigungsvorrichtung zentral unterhalb der Gasdüse positioniert werden. Ein weiterer Vorteil besteht darin, dass auf etwaige weitere Relativbewegungen eines Handlinggerätes, zum Beispiel eines Roboters, an welchem der Schweißbrenner befestigt ist, verzichtet werden kann. Aber auch für solche Schweißbrenner, die nicht mit einem Roboter oder Handlinggerät verbunden sind, ergibt sich aufgrund dieser Ausgestaltung eine erheblich vereinfachte Wartung beziehungsweise Reinigung der Gasdüse.

Von Vorteil ist es nach einer anderen Ausgestaltung der Erfindung vorgesehen, dass eine Sprühdüse der Sprühvorrichtung an einem Messerhalter der Schneidvorrichtung angeordnet ist. Es versteht sich, dass gegebenenfalls auch zwei Sprühdüsen an jeweils einem der Messerhalter angeordnet sein können.

Schließlich erweist es sich als vorteilhaft, dass das oder die Messer der Schneidvorrichtung über ein Kniehebelsystem verfahrbar beziehungsweise angetrieben sind, wodurch eine erhebliche Kraftübersetzung zur Schneidkraftübertragung auf das oder die Messer der Schneidvorrichtung erreicht wird.

Weitere Vorteile, Merkmale, Anwendungsmöglichkeiten und Ausgestaltungen der vorliegenden Erfindung ergeben sich aus der nachfolgenden Beschreibung eines Ausführungsbeispieles anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine perspektivische Vorderansicht eines Ausführungsbeispiels einer erfindungsgemäßen Vorrichtung und
- Figur 2: eine vergrößerte Darstellung der Spann/Haltevorrichtung der Schneidvorrichtung sowie Sprühvorrichtung und deren relative Anordnung zueinander in perspektivischer Darstellung.

Die in den Figuren abgebildete Vorrichtung 10 dient zum Reinigen einer Gasdüse 12 eines Schweißbrenners 14 und zum Einsprühen der Gasdüse 12 beziehungsweise eines in der Gasdüse 12 befindlichen Schweißdrahtes.

Die Vorrichtung 10 weist eine Spann-/Haltevorrichtung 16 für die Gasdüse 12 sowie eine Reinigungsvorrichtung 18 zum mechanischen Entfernen von Schweißrückständen aus der Gasdüse 12 auf. Die Reinigungsvorrichtung 18 ist in Richtung einer ersten Achse 20 zur Spann-/Haltevorrichtung 16 hin beziehungsweise von dieser weg verfahrbar.

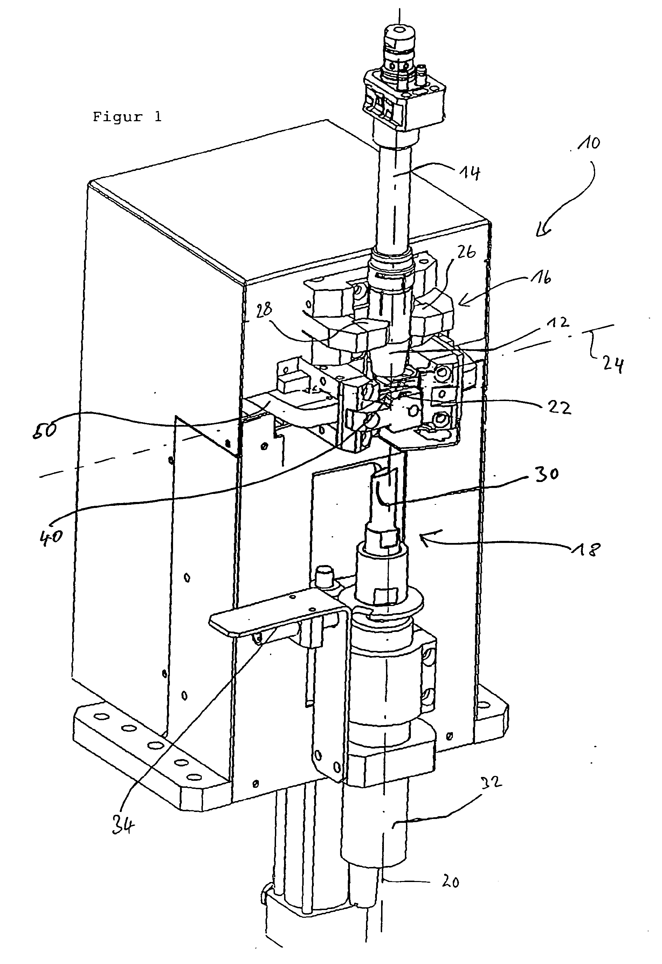

Eine Sprühvorrichtung 22 dient zum Austragen eines Antihaftmittels oder eines sonstigen fluiden Mediums, mit welchem die Gasdüse 12 beziehungsweise der in der Gasdüse 12 befindliche Schweißdraht gleichmäßig benetzt wird. Die Sprühvorrichtung 22 ist in Richtung einer zur ersten Achse 20 unterschiedlich angeordneten zweiten Achse 24 bezüglich der Spann-/Haltvorrichtung 16 verfahrbar. Wie Figur 1 zu entnehmen ist, sind die erste Achse und die zweite Achse im wesentlichen quer zueinander angeordnet und schließen bevorzugt einen Winkel zwischen ca. 60° und ca. 150°, vorzugsweise ca. 90° ein.

Die Sprühvorrichtung 22 umfasst auch eine Sprühdüse 36, die in Richtung dieser zweiten Achs 24 verfahrbar ist. Die verfahrbare Sprühdüse 36 weist eine Düsenachse 38 auf, die mit der ersten Achse 20 einen Winkel von < 60°, bevorzugt ca. 45° bis ca. 25° oder weniger, einschließt. Es versteht sich, dass die Düsenachse 38 der Sprühdüse 36 auch parallel zur ersten Achse 20 angeordnet sein kann beziehungsweise mit dieser fluchtet. Aufgrund dieser Maßnahme ist für ein sicheres und vollständiges Eintreten des aus der Sprühdüse 36 austretenden Fluidstrahls in die Gasdüse 12 gesorgt.

Die Vorrichtung 10 weist auch eine Schneidvorrichtung 40 zum Ablängen des Schweißdrahtes der Gasdüse 12 auf, welche zwischen der Spann-/Haltevorrichtung 16 und einer Reinigungsvorrichtung 18 angeordnet ist. Die Schneidvorrichtung 40 besteht aus einem Untermesser 42 und einem Obermesser 44, wobei wenigstens eines der Messer 42, 44 verfahrbar ist. Bevorzugt sind beide Messer 42, 44, welche in einer Ausgangsposition seitlich einander diametral gegenüberliegend der ersten Achse 20 angeordnet sind, gemeinsam aufeinander zu und voneinander weg verfahrbar. Weiterhin besitzt die Schneidvorrichtung 40 Messerhalter 46, 48 zum Halten der daran auswechselbar befestigten Messer 42, 44. Die Schneidvorrichtung 40 ist ebenso wie die Sprühvorrichtung 22 im wesentlichen in Richtung der zweiten Achse 24 verfahrbar.

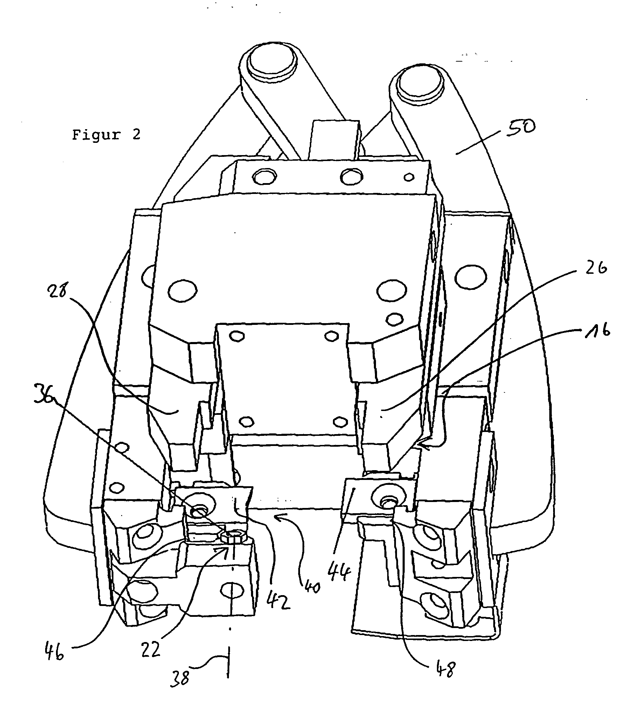

Insbesondere ist, wie aus der vergrößerten Darstellung der Figur 2 ersichtlich, die Sprühvorrichtung 22 beziehungsweise die Sprühdüse 36 mechanisch mit der Schneidvorrichtung 44 bekoppelt. Insbesondere ist eine Sprühdüse 36 der Sprühvorrichtung 22 an einem der Messerhalter 46, 48 der Schneidvorrichtung 40 angeordnet. Werden die Schneidvorrichtung 44 beziehungsweise die Messer 42, 44 beziehungsweise die Messerhalter 46, 48 in Richtung der zweiten Achse 24 aus einer Ruheposition in die Schneidposition verfahren, bewegt sich die Sprühvorrichtung 22 beziehungsweise die Sprühdüse 36 gemeinsam mit der Schneidvorrichtung in Richtung der zweiten Achse 24. Zeitgleich mit der Schneidbewegung der Schneidvorrichtung 40 wird dann auch die Sprühvorrichtung 22 beziehungsweise die Sprühdüse 36 hin zur Gasdüse 12 verfahren, so dass dann während des Schneidvorganges oder nach diesem Schneidvorgang der Schneidvorrichtung 40 auch die Sprühvorrichtung 22 aktiviert werden kann, um die Gasdüse 12 sowie den Schweißdraht mit Antihaftmittel zu benetzen. Verfahrensmäßig findet insoweit zeitgleich ein Schneiden beziehungsweise Ablängen des Schweißdrahtes sowie eine Benetzung der Gasdüse 12 mit Antihaftmittel oder sonstigem Fluid statt.

Das oder die Messer 42, 44 beziehungsweise die Messerhalter 46, 48 der Schneidvorrichtung 40 werden über ein Kniehebelsystem 50 verfahren beziehungsweise angetrieben, so dass für eine ausreichende Kraftübersetzung Sorge getragen ist.

Die Spann-/Haltevorrichtung 16 weist eine oder mehrere Spann-/Haltebacken 26, 28 zum Umgreifen der Gasdüse 12 auf, so dass die Gasdüse 12 bezüglich der ersten Achse 20 im wesentlichen zentriert ist. Die Reinigungsvorrichtung 18 umfasst ein rotierendes Messer oder einen rotierenden Fräser 30, dessen Rotationsachse mit der ersten Achse 20 im wesentlichen fluchtet. Der Fräser 30 beziehungsweise das Messer werden durch einen Antrieb, insbesondere einen Luftmotor 32, in Rotation versetzt. Die Drehzahl des Fräsers 30 oder des Messers werden von einer Drehzahlüberwachung 34 erfasst und gesteuert/geregelt.

### Bezugszeichenliste

- 10: Vorrichtung
- 12: Gasdüse
- 14: Schweißbrenner
- 16: Spann-/Haltevorrichtung
- 18: Reinigungsvorrichtung
- 20: erste Achse
- 22: Sprühvorrichtung
- 24: zweite Achse
- 26: Spann-/Haltebacken
- 28: Spann-/Haltebacken
- 30: Fräser
- 32: Luftmotor
- 34: Drehzahlüberwachung
- 36: Sprühdüse
- 38: Düsenachse
- 40: Schneidvorrichtung
- 42: Untermesser
- 44: Obermesser
- 46: Messerhalter
- 48: Messerhalter
- 50: Kniehebelsystem

## Patentansprüche

1. Vorrichtung (10) zum Reinigen einer Gasdüse (12) eines Schweißbrenners (14) und zum Einsprühen der Gasdüse (12) beziehungsweise eines in der Gasdüse (12) befindlichen Schweißdrahtes mit einer Spann-/Haltevorrichtung (16) für die Gasdüse (12) mit einer Reinigungsvorrichtung (18) zum mechanischen Entfernen von Schweißrückständen aus der Gasdüse (12), wobei die Reinigungsvorrichtung (18) in Richtung einer ersten Achse (20) zur Spann-/Haltevorrichtung (16) hin beziehungsweise von dieser weg verfahrbar ist, und mit einer Sprühvorrichtung (22) zum Austragen eines Antihaftmittels oder eines sonstigen fluiden Mediums, **dadurch gekennzeichnet, dass** die Sprühvorrichtung (22) in Richtung einer zur ersten Achse (20) unterschiedlich angeordneten zweiten Achse (24) bezüglich der Spann-/Haltevorrichtung (16) verfahrbar ist.

2. Vorrichtung nach Anspruch 1, **dadurch gekennzeichnet, dass** die Spann-/Haltevorrichtung (16) ein oder mehrere Spann-/Haltebacken (26, 28) zum Umgreifen der Gasdüse (12) aufweist, so dass die Gasdüse (12) bezüglich der ersten Achse (20) zentriert ist.

3. Vorrichtung nach Anspruch 1 oder 2, **dadurch gekennzeichnet, dass** die Reinigungsvorrichtung (18) ein rotierendes Messer oder einen rotierenden Fräser (30) aufweist, dessen Rotationsachse mit der ersten Achse im wesentlichen fluchtet.

4. Vorrichtung nach Anspruch 3, **dadurch gekennzeichnet, dass** der Fräser (30) beziehungsweise das Messer durch einen Antrieb, insbesondere einen Luftmotor (32) angetrieben ist.

5. Vorrichtung nach einem der Ansprüche 3 oder 4, **dadurch gekennzeichnet, dass** die Drehzahl des Fräsers (30) oder des Messers von einer Drehzahlüberwachung (34) erfasst und gesteuert/geregelt wird.

6. Vorrichtung nach einem der vorhergehenden Ansprüche, **dadurch gekennzeichnet, dass** die erste Achse (20) und zweite Achse (24) im wesentlichen quer zueinander angeordnet sind und bevorzugt einen Winkel zwischen 60° und ca. 150°, vorzugsweise ca. 90°, einschließen.

7. Vorrichtung nach einem der vorhergehenden Ansprüche, **dadurch gekennzeichnet, dass** die Sprühvorrichtung (22) eine Sprühdüse (36) aufweist, die in Richtung der zweiten Achse (24) verfahrbar ist.

8. Vorrichtung nach einem der vorhergehenden Ansprüche, **dadurch gekennzeichnet, dass** die verfahrbare Sprühdüse (36) eine Düsenachse (38) aufweist, die mit der ersten Achse (20) einen Winkel von < 60°, bevorzugt 45° bis 25° oder weniger, einschließt.

9. Vorrichtung nach einem der vorhergehenden Ansprüche, **dadurch gekennzeichnet, dass** die Vorrichtung (10) eine verfahrbare Schneidvorrichtung (40) zum Ablängen des Schweißdrahtes der Gasdüse (12) aufweist.

10. Vorrichtung nach Anspruch 9, **dadurch gekennzeichnet, dass** die Schneidvorrichtung (40) ein Untermesser (42) und ein Obermesser (44) aufweist, wobei wenigstens eines der Messer (42, 44), bevorzugt beide Messer (42, 44), verfahrbar sind.

11. Vorrichtung nach einem der Ansprüche 9 oder 10, **dadurch gekennzeichnet, dass** die Schneidvorrichtung (40) Messerhalter (46, 48) zum Halten der auswechselbaren Messer (42, 44) aufweist.

12. Vorrichtung nach einem der Ansprüche 9 bis 11, **dadurch gekennzeichnet, dass** die Schneidvorrichtung (40) bzw. die Messer (42, 44) im wesentlichen in Richtung der zweiten Achse (24) verfahrbar ist.

13. Vorrichtung nach einem der Ansprüche 9 bis 12, **dadurch gekennzeichnet, dass** die Schneidvorrichtung (40) zwischen Spann-/Haltevorrichtung (16) und Reinigungsvorrichtung (18) angeordnet ist.

14. Vorrichtung, insbesondere nach einem der vorhergehenden Ansprüche oder nach dem Oberbegriff des Anspruchs 1, **dadurch gekennzeichnet, dass** die Sprühvorrichtung (22) mechanisch mit der Schneidvorrichtung (44) gekoppelt ist.

15. Vorrichtung nach einem der vorhergehenden Ansprüche, **dadurch gekennzeichnet, dass** eine Sprühdüse (36) der Sprühvorrichtung (22) an einem Messerhalter (46, 48) der Schneidvorrichtung (44) angeordnet ist.

16. Vorrichtung nach einem der vorhergehenden Ansprüche, **dadurch gekennzeichnet, dass** das oder die Messer (42, 44) der Schneidvorrichtung (40) über ein Kniehebelsystem (50) verfahrbar beziehungsweise angetrieben sind.

## Claims

1. Device (10) for cleaning a gas nozzle (12) of a welding torch (14) and for sprayingin of the gas nozzle (12) or of a welding wire, which is disposed in the gas nozzle (12), with a clamping/holding device (16) for the gas nozzle (12), with a cleaning device (18) for mechanical removal of weld residues from the gas nozzle (12), wherein the cleaning device (18) is movable in the direction of a first axis (20) towards or away from the clamping/holding device (16), and with a spray device (22) for discharge of an anti-adhesion agent or other fluid medium, **characterised in that** the spray device (22) is movable in direction of a second axis (24), which is arranged differently from the first axis (20), with respect to the clamping/holding device (16).

2. Device according to claim 1, **characterised in that** the clamping/holding device (16) comprises one or more clamping/holding jaws (26, 28) for engaging around the gas nozzle (12) so that the gas nozzle (12) is centred with respect to the first axis (20).

3. Device according to claim 1 or 2, **characterised in that** the cleaning device (18) comprises a rotating knife or a rotating miller (30), the axis of rotation of which is substantially aligned with the first axis.

4. Device according to claim 3, **characterised in that** the miller (30) or the knife is driven by a drive, particularly an air motor (32).

5. Device according to one of claims 3 and 4, **characterised in that** the rotational speed of the miller (30) or of the knife is detected by a rotational speed monitoring means (34) and controlled/regulated.

6. Device according to one of the preceding claims, **characterised in that** the first axis (20) and second axis (24) are arranged substantially transversely to one another and preferably include an angle between 60° and approximately 150°, preferably approximately 90°.

7. Device according to one of the preceding claims, **characterised in that** the spray device (22) comprises a spray nozzle (36) movable in the direction of the second axis (24).

8. Device according to one of the preceding claims, **characterised in that** the movable spray nozzle (36) has a nozzle axis (38) which includes an angle of less than 60°, preferably 45° to 25° or less, with the first axis (20).

9. Device according to one of the preceding claims, **characterised in that** the device (10) comprises a movable cutting device (40) for cutting to length the welding wire of the gas nozzle (12).

10. Device according to claim 9, **characterised in that** the cutting device (40) comprises a lower knife (42) and an upper knife (44), wherein at least one of the knives (42, 44), preferably both knives (42, 44), is or are movable.

11. Device according to one of claims 9 and 10, **characterised in that** the cutting device (40) comprises knife holders (46, 48) for holding the exchangeable knives (42, 44).

12. Device according to one of claims 9 to 11, **characterised in that** the cutting device (40) or the knife (42, 44) is movable substantially in the direction of the second axis (24).

13. Device according to one of claims 9 to 12, **characterised in that** the cutting device (40) is arranged between clamping/holding device (16) and cleaning device (18).

14. Device, particularly according to one of the preceding claims or according to the introductory part of claim 1, **characterised in that** the spray device (22) is mechanically coupled with the cutting device (44).

15. Device according to one of the preceding claims, **characterised in that** a spray nozzle (36) of the spray device (22) is arranged at a knife holder (46, 48) of the cutting device (44).

16. Device according to one of the preceding claims, **characterised in that** the knife or knives (42, 44) of the cutting device (40) is or are movable or driven by way of a toggle joint system (50).

## Revendications

1. Dispositif (10) pour nettoyer d'une tuyère à gaz (12) d'un chalumeau soudeur (14) et pour asperger l'intérieur de la tuyère à gaz (12), plus précisément un fil de soudure contenu dans la tuyère à gaz (12), comportant un dispositif de serrage et de fixation (16) pour la tuyère à gaz (12), comportant un dispositif de nettoyage (18) pour éliminer mécaniquement les résidus de soudure hors de la tuyère à gaz (12), le dispositif de nettoyage (18) étant mobile dans la direction d'un premier axe (20) pour s'approcher ou s'écarter du dispositif de serrage et de fixation (16), et comportant un dispositif de pulvérisation (22) pour l'application d'un agent anti-adhésif ou d'un autre fluide, **caractérisé en ce que** le dispositif de pulvérisation (22) est mobile par rapport au dispositif de serrage et de fixation (16) dans la direction d'un deuxième axe (24), orienté différemment du premier axe (20).

2. Dispositif selon la revendication 1, **caractérisé en ce que** le dispositif de serrage et de fixation (16) comporte une ou plusieurs mâchoires de serrage ou fixation (26, 28) pour enserrer la tuyère à gaz (12), de telle sorte que la tuyère à gaz (12) est centrée par rapport au premier axe (20).

3. Dispositif selon la revendication 1 ou 2, **caractérisé en ce que** le dispositif de nettoyage (18) comporte une lame de coupe rotative ou une fraise (30) rotative, dont l'axe de rotation est sensiblement aligné avec le premier axe.

4. Dispositif selon la revendication 3, **caractérisé en ce que** la fraise (30) ou la lame de coupe est actionnée par un système d'entraînement, en particulier par un moteur pneumatique (32).

5. Dispositif selon la revendication 3 ou 4, **caractérisé en ce que** la vitesse de rotation de la fraise (30) ou de la lame de coupe est enregistrée et commandée et/ou réglée par un système de contrôle de vitesse de rotation (34).

6. Dispositif selon l'une quelconque des revendications précédentes, **caractérisé en ce que** le premier axe (20) et le deuxième axe (24) sont agencés sensiblement transversalement l'un à l'autre et délimitent de préférence entre eux un angle entre 60° et environ 150°, de préférence égal à environ 90°.

7. Dispositif selon l'une quelconque des revendications précédentes, **caractérisé en ce que** le dispositif de pulvérisation (22) comporte une buse de pulvérisation (36), qui est mobile dans la direction du deuxième axe (24).

8. Dispositif selon l'une quelconque des revendications précédentes, **caractérisé en ce que** la buse de pulvérisation (36) mobile comporte un axe de buse (38), qui délimite avec le premier axe (20) un angle inférieur à 60°, de préférence de 45° à 25° ou moins.

9. Dispositif selon l'une quelconque des revendications précédentes, **caractérisé en ce que** le dispositif (10) comporte un dispositif de coupe (40) mobile pour couper à longueur le fil de soudure de la tuyère à gaz (12).

10. Dispositif selon la revendication 9, **caractérisé en ce que** le dispositif de coupe (40) comporte une lame de coupe inférieure (42) et une lame de coupe supérieure (44), au moins une des lames de coupe (42, 44), de préférence les deux lames de coupe (42, 44), étant mobiles.

11. Dispositif selon la revendication 9 ou 10, **caractérisé en ce que** le dispositif de coupe (40) comporte un porte-lame (46, 48) pour maintenir les lames de coupe (42, 44) amovibles.

12. Dispositif selon l'une quelconque des revendications 9 à 11, **caractérisé en ce que** le dispositif de coupe (40) ou les lames de coupe (42, 44) sont mobiles sensiblement dans la direction du deuxième axe (24).

13. Dispositif selon l'une quelconque des revendications 9 à 12, **caractérisé en ce que** le dispositif de coupe (40) est agencé entre le dispositif de serrage et de fixation (16) et le dispositif de nettoyage (18).

14. Dispositif, en particulier selon l'une quelconque des revendications précédentes ou selon le préambule de la revendication 1, **caractérisé en ce que** le dispositif de pulvérisation (22) est couplé mécaniquement au dispositif de coupe (40).

15. Dispositif selon l'une quelconque des revendications précédentes, **caractérisé en ce qu'**une buse de pulvérisation (36) du dispositif de pulvérisation (22) est agencée sur un porte-lame (46, 48) du dispositif de coupe (40).

16. Dispositif selon l'une quelconque des revendications précédentes, **caractérisé en ce que** la ou les lames de coupe (42, 44) du dispositif de coupe (40) peuvent être déplacées, plus précisément sont actionnées par un système de levier à genouillère (50).
